# EUROPEAN PATENT SPECIFICATION

(11) **EP 3 989 522 B1**
(45) Date of publication and mention of the grant of the patent: **18.02.2026**
(21) Application number: 21198169.1
(22) Date of filing: 22.09.2021
(51) Int. Cl.: H04L 67/565, H04L 69/04, H04L 69/24

(54) **PAYLOAD COMPRESSION**
NUTZLASTKOMPRESSION
COMPRESSION DE CHARGE UTILE

(30) Priority: 23.10.2020 IN 202041046346
(43) Date of publication of application: 27.04.2022
(73) Proprietor: Nokia Technologies Oy, 02610 Espoo (FI)
(72) Inventor: MAHESHWARI, Ashish, Bangalore (IN); SREEKUMAR, Sreejesh, Bangalore (IN); JOIS, Diwakar, Bangalore (IN); LANDAIS, Bruno, Pleumeur-Bodou (FR); JERICHOW, Anja, Grafing bei Munchen (DE); AGGARWAL, Chaitanya, Munich (DE); JAKKAMALINGU, Serangaraj, Bangalore (IN)
(74) Representative: Nokia EPO representatives

(56) References cited:
- WO-A1-2007/040521
- WO-A1-2020/012065
- ANONYMOUS: "draft-ietf-tls-certificate-compression-00 - Transport Layer Security (TLS) Certificate Compression", 8 June 2017 (2017-06-08), XP093142609, Retrieved from the Internet <URL:https://datatracker.ietf.org/doc/draft-ietf-tls-certificate-compression/00/> [retrieved on 20240318]

## Description

### FIELD

The present disclosure relates to managing payload compression in inter-network connectivity interworking scenarios.

### BACKGROUND

Communication networks provide communication services to users within their communication domain. For example, a public land mobile network, PLMN, may connect users with terminals registered to the PLMN by arranging communication pathways switched together to convey information between the terminals. To obtain connectivity between communicating entities registered in different networks, the networks need inter-network interfaces to convey information across their respective boundaries.

Gateways are, in general, network nodes tasked with exchanging information with entities in other networks. In other words, gateways enable networks to be connected together, such that nodes in different networks may communicate with each other. In a typical case, such an inter-network connection may traverse at least one gateway in each network along the overall communication path between the entities in the differing networks. In the case of two networks, the inter-network communication may traverse one gateway in a first one of the networks, and another gateway in the other one of the networks, for example. Document WO2007/040521 is a prior art document and relates to systems and methods for establishing and controlling a connection from a client to a destination server via multiple proxies using a network protocol.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core, at least one memory including computer program code, the at least one memory and the computer program code being configured to, with the at least one processing core, cause the apparatus at least to initiate, from a first gateway, a handshake process configured to establish a control plane connection prior to establishing an associated data plane connection from the apparatus to a gateway node in second network, and complete the establishment of the control plane connection prior to the establishing of the data plane connection, the apparatus being in a first network distinct from the second network, indicate during the establishing of the control plane connection that compression of payload communicated over the data plane connection is requested, convey payload data over the data plane connection in accordance with a payload compression negotiated in the handshake process, and wherein the data plane connection to the gateway node traverses at least one intermediate internet protocol exchange.

According to a second aspect of the present disclosure, there is provided an apparatus comprising at least one processing core, at least one memory including computer program code, the at least one memory and the computer program code being configured to, with the at least one processing core, cause the apparatus at least to participate, as a first gateway, in a handshake process configured to establish a control plane connection prior to establishing an associated data plane connection from the apparatus to a gateway node in first network, and complete the establishment of the control plane connection prior to the establishing of the data plane connection, the apparatus being in a second network distinct from the first network, indicate during the establishing of the control plane connection that compression of payload communicated over the data plane connection is supported, convey payload data over the data plane connection in accordance with a payload compression negotiated in the handshake process, and wherein the data plane connection to the gateway node traverses at least one intermediate internet protocol exchange.

According to a third aspect of the present disclosure, there is provided an apparatus comprising at least one processing core, at least one memory including computer program code, the at least one memory and the computer program code being configured to, with the at least one processing core, cause the apparatus at least to participate, as a first gateway, in a handshake process configured to establish a control plane connection prior to establishing an associated data plane connection from the apparatus to a gateway node in first network, the apparatus being in a second network distinct from the first network, wherein the data plane connection to the gateway node traverses at least one intermediate internet protocol exchange, receive a hypertext transfer protocol, HTTP, payload communicated over the data plane connection that is compressed or not compressed; and determine whether to compress the reconstructed hypertext transfer protocol, HTTP, payload received over the data plane connection before forwarding it onward to a network function in the second network.

According to a fourth aspect of the present disclosure, there is provided a method, comprising participating, by a first gateway, in a handshake process configured to establish a control plane connection prior to establishing an associated data plane connection from the apparatus to a gateway node in first network, the apparatus being in a second network distinct from the first network, wherein the data plane connection to the gateway node traverses at least one intermediate internet protocol exchange, receiving a hypertext transfer protocol, HTTP, payload communicated over the data plane connection that is compressed or not compressed, and determining whether to compress the reconstructed hypertext transfer protocol, HTTP, payload received over the data plane connection before forwarding it onward to a network function in the second network.

According to a fifth aspect of the present disclosure, there is provided a non-transitory computer readable medium having stored thereon a set of computer readable instructions that, when executed by at least one processor, cause an apparatus to at least participate as a first gateway in a handshake process configured to establish a control plane connection prior to establishing an associated data plane connection from the apparatus to a gateway node in first network, the apparatus being in a second network distinct from the first network, wherein the data plane connection to the gateway node traverses at least one intermediate internet protocol exchange, receive a hypertext transfer protocol, HTTP, payload communicated over the data plane connection that is compressed or not compressed, and determine whether to compress the reconstructed hypertext transfer protocol, HTTP, payload received over the data plane connection before forwarding it onward to a network function in the second network.

### BRIEF DESCRIPTION OF THE DRAWINGS

FIGURE 1 illustrates an example system in accordance with at least some embodiments of the present invention;
FIGURE 2A illustrates an example embodiment in accordance with at least some embodiments of the present invention;
FIGURE 2B illustrates an example embodiment in accordance with at least some embodiments of the present invention;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

Disclosed herein are methods for employing payload compression in inter-network interoperability scenarios, for example where a network function, NF, in a first network needs to invoke a service produced by a network repository function, NRF, or other network function producer, NFp of a second network, the interoperability scenario involving intermediate internet protocol, IP, exchanges, IPXs. The inter-network interface may comprise an N32 interface, for example, although the invention is not limited to this particular interface.

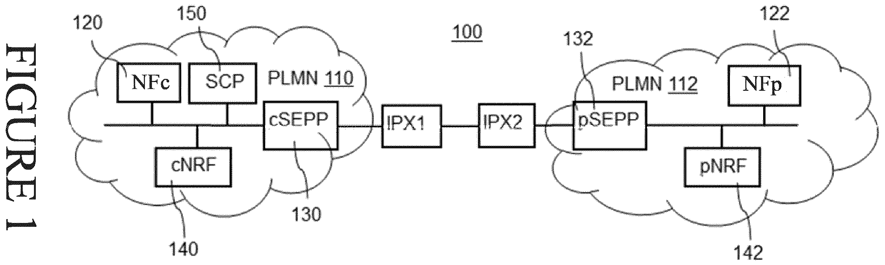

FIGURE 1 illustrates an example system in accordance with at least some embodiments of the present invention. The system comprises two public land mobile networks, PLMNs, 110, 112, each equipped with a network function, NF, 120, 122. A network function may refer to an operational and/or a physical entity. A network function may be a specific network node or element, or a specific function or set of functions carried out by one or more entities, such as virtualized network elements, VNFs. One physical node may be configured to perform plural NFs. Examples of such network functions include a resource control or management function, session management or control function, interworking, data management or storage function, authentication function or a combination of one or more of these functions.

In case of a third generation partnership project, 3GPP, 5G system service based architecture, SBA, core network, NFs may comprise at least some of an access and mobility management function, AMF, a session management function, SMF, a network slice selection function, NSSF, a network exposure function, NEF, a network repository function, NRF, a unified data management node, UDM, an authentication server function, AUSF, a policy control function, PCF, and an application function, AF. The PLMNs each may further comprise a security edge protection proxy, SEPP, 130, 132 configured to operate as a security edge node and/or gateway. The NFs may communicate with each other using representational state transfer application programming interfaces, for example. These may be known as Restful APIs. Further examples of NFs include NFs related to gaming, streaming or industrial process control. The system may comprise also nodes from 3G or 4G systems, such as home subscriber server, HSS, and a suitable interworking function for protocol translations between e.g. diameter and REST API Json. While described herein primarily using terminology of 5G systems, the principles of the invention are applicable also to other communication networks using gateways as described herein, such as non-3GPP networks, for example.

In a two-PLMN case, in FIGURE 1, the SEPP 130, 132 is a network node at the boundary of an operator's network that may be configured to receive a message, such as an HTTP request or HTTP response from an NF, to apply protection for sending and to forward the reformatted message through a chain of intermediate nodes, such as IP eXchanges, IPX, towards a receiving SEPP. The receiving SEPP receives a message sent by the sending SEPP and forwards the message towards an NF within its operator's network, e.g. the AUSF. The SEPP may make additional security validations. An end-to-end protocol connection may be established between SEPPs 130, 132. Such an end-to-end connection may be based on transport layer security, TLS, for example. Data of the end-to-end connection may be conveyed by intermediate IPXs, however the role of these IPXs with respect to the end-to-end connection may be merely forwarding and the IPXs do not act on the data of the end-to-end connection. A handshaking procedure may be performed between the SEPPs to initialize the end-to-end connection, negotiate the security and protection policies to apply to control plane messages, such as HTTP requests and responses issued by NFs, exchanged between SEPPs, for example over the N32-f interface, and establish this end-to-end connection with the SEPPs as the endpoints of the end-to-end connection. An example of such a handshake procedure is an N32-c handshake.

The SEPP 130, 132 is a network node at the boundary of an operator's network that may be configured to receive a message, such as an HTTP request or HTTP response from an NF, to apply protection for sending and to forward the reformatted message through a chain of intermediate nodes, such as IP eXchanges, IPX, towards a receiving SEPP. The receiving SEPP receives a message sent by the sending SEPP and forwards the message towards an NF within its operator's network, e.g. the AUSF. The SEPP may make additional security validations

In the example of FIGURE 1, communication between a service-consuming NF and a service-producing NF, henceforth referred to as NFc 120 and NFp 122. They may also be referred to as NF service consumer and NF service producer, respectively.

A service communication proxy, SCP, 150 may be deployed for indirect communication between network functions, NFs, or between NFs and the SEPP. An SCP is an intermediate network entity to assist in indirect communication between an NFc and an NFp, including routing messages, such as, for example, control plane messages between the NFs, and optionally including discovering and selecting NFp on behalf of NFc or requesting an access token from the NRF or an Authorization Server on behalf of NFc to access the service of NFp.

Direct communication may be applied between NFc 120 and NFp 122 for an NF service, or NF service communication may be performed indirectly via SCP(s) 150. In direct communication, the NFc 120 performs discovery of the target NFp 122 by local configuration or via local NRF, cNRF 140. In indirect communication, the NFc 120 may delegate the discovery of the target NFp 122 to the SCP 150. In the latter case, the SCP may use the parameters provided by NFc 120 to perform discovery and/or selection of the target NFp, for example with reference to one or more NRF(s).

NF discovery and NF service discovery enable entities, such as NFc or SCP, to discover a set of NF instance(s) and NF service instance(s) for a specific NF service or an NF type. The NFc and/or the SCP may be core network entities. The network repository function, NRF, may comprise a function that is used to support the functionality of NF and NF service registration, discovery, authorization and status notification. The NRF may maintain an NF profile of available NFp entities and their supported services. The NRF may notify about newly registered, updated, or deregistered NFp entities along with its NF services to a subscribed NFc or SCP. An NRF may thus advise NFc entities concerning where, that is, from which NFp entities, they may obtain services they need. An NRF may be co-located together with an SCP, for example, run in a same computing substrate. Alternatively, NRF may be in a physically distinct node than an SCP or even hosted by a service provider.

In order for the NFc 120 or SCP 150 to obtain information about the NFp and/or NF service(s) registered or configured in a PLMN/slice, the NFc 120 or SCP 150 may initiate, based on local configuration, a discovery procedure with an NRF, such as cNRF 140. The discovery procedure may be initiated by providing the type of the NF and optionally a list of the specific service(s) it is attempting to discover. The NFc 120 or SCP 150 may also provide other service parameters, such as information relating to network slicing.

It is to be noted that at least some of the entities or nodes 120, 122, 140, 142 may act in both service-consuming and service-providing roles and that their physical structure may be similar or identical, while their role in the present examples in delivery of a particular message or service is identified by use of the prefix/suffix "c" or "p" indicating whether they are acting as the service-consuming or service-producing NF. It is to be noted that instead of "c" and "p", "v" for visited and "h" for home can be used to refer to at least some respective entities in the visited and home PLMNs. In some embodiments, a system implementing an embodiment of the present disclosure comprises both fourth generation, 4G, and fifth generation, 5G, parts.

An interface between two SEPPS in different PLMNs in a 3GPP interoperability scenario may be referred to as an N32 interface. In detail, N32-c is a control connection for managing the N32 interface while N32-f is a data plane connection used to send payload data, such as, for example, HTTP requests and responses issued by NFs in each PLMN, over an N32 interface between SEPPs. The N32-f payload may comprise JSON web encryption, JWE, and JSON web signature, JWS, messages between the SEPPs, for example. N32-c may be used, for example, for key agreement, parameter exchanges and error handling between the endpoint SEPPs. A TLS end-to-end connection may be used to convey information over the N32-c interface, for example.

When a cSEPP 130 prepares payload data for transmission to the other N32 endpoint, it has been observed that cSEPP needs first to decompress the payload received from the sending NF if payload compression is used between NFc and NFp, and that reformatting and/or encryption operations performed by the cSEPP prior to submission of payload data to the N32 interface may further increase the payload size. In some events, the payload size may even increase to an integer multiple of its original size. This presents a problem as an increase of the payload size along a communication path between, for example, cSEPP 130 and NFp 122 may render the performance of the aggregate system unpredictable. Therefore, to obtain the technical effect of more predictable network performance, a data compression mechanism on the end-to-end inter-SEPP data plane connection, such as N32-f, is of interest. Concerning the reformatting, a SEPP may reformat an HTTP/2 message by encapsulating the whole message into a body of a new HTTP POST message, for example. The body of the HTTP POST request / response message may then contain the reformatted original HTTP/2 request/response message respectively. The HTTP POST request/response body may then be encoded as a "N32fReformattedReqMsg"/"N32fReformattedRspMsg" JSON body, respectively. When receiving an N32-f payload, the receiving SEPP, pSEPP 132, needs to reconstruct the original HTTP message. A second problem here is that no procedure has been defined to enable the pSEPP to determine whether it should compress the reconstructed HTTP payload before forwarding it to the receiving NF, NFp, for example if the original HTTP message that had been received by cSEPP 130 had been compressed by NFc 120.

In detail, N32-f JSON payload compression may be negotiated either hop-by-hop, or end-to-end by negotiating the support/use of N32-f payload compression during a handshake procedure to establish the end-to-end inter-SEPP connection. An example of such a handshake procedure is an N32-c handshake. In the latter case, the initiating gateway, such as SEPP, will indicate during the establishing of the logical control plane connection prior to the establishment of the associated data plane connection, such as N32-f, that compression of payload communicated over the data plane connection is and/or supported. The establishing of the control plane connection is a procedure which begins before the control plane connection is in existence, and which ends when the control plane connection is in existence.

When negotiating payload compression hop-by-hop, the cSEPP may provide the indication that compression of payload communicated over the data plane connection is supported in a message addressed to the next node on the N32-f path, e.g. to an intermediate internet protocol exchange, IPX1, the first intermediate IPX being an endpoint of a connection used to convey the message. Likewise, the said next node of the N32-f path, e.g. IPX1, may also indicate support of payload compression to the cSEPP in a message addressed to the cSEPP. The indication may be conveyed by including a Content-encodings header in HTTP requests and responses indicating support of compression, for example. Examples of HTTP requests and responses include HTTP POST responses and responses. A supported compression mechanism, such as gzip, may be indicated. Alternatively, the cSEPP may discover whether the next node on the N32-f path supports payload compression by sending an HTTP OPTIONS request, for example, and by said next node on the N32-f path responding with a response including the Content-encodings header indicating support of compression, for example gzip. The first IPX may be the first IPX along the communication path from the cSEPP to the pSEPP. The first IPX may proceed in the same manner towards its the next-hop node on the N32-f path, for example IPX2 in the case of the two-IPX situation illustrated in FIGURE 1. In the hop-by-hop payload compression negotiation, the handshake process to establish the end-to-end data plane connection between the SEPPs, such as, for example, the N32-c handshake, may be silent concerning payload compression indications relating to the data plane connection, such as N32-f. The end-to-end data plane connection between the gateway devices, such as SEPPs, comprises and traverses plural sub-segments between individual ones of the participating gateways and IPXs. When negotiating hop by hop, support of payload compression is negotiated on each sub-segment individually.

A result of the hop-by-hop payload compression negotiation may be that some inter-IPX connections along the communication path between the gateways, such as SEPPs, use payload compression and other inter-IPX connections along this communication path do not use payload compression. For example, some intermediate IPX units may not be configured to support payload compression while others may be configured to support payload compression and willing to use it when requested.

Payload compression may be employed by cSEPP after encryption of the N32-f payload data to be transmitted over the end-to-end data plane connection to the other gateway device, such as pSEPP.

On the other hand, when negotiating end-to-end, the cSEPP may provide the indication that compression of payload communicated over the data plane connection is requested, or supported, in the handshake process which establishes the logical control plane connection prior to establishing the associated data plane end-to-end connection between the gateways, for example the N32-c handshake process. The other gateway, such as SEPP, is then the endpoint of a connection used to convey the message which comprises the indication that compression of payload is requested. In this case the initiating gateway, such as cSEPP, may be configured with information defining which compression mechanisms are supported by at least one of the at least one intermediate IPX along the communication path of the end-to-end data plane connection, such as N32-f. For example, the gateway may have information of support of compression mechanisms for IPXs local to the gateway's PLMN via service level agreements, SLAs, between the gateway network operator and IPX provider(s). When both gateways, such as SEPPs, have such information concerning IPXs with which they have SLAs, the negotiation may take into account the payload compression capabilities of the IPXs which will participate in the data plane connection. In some cases, this may enable taking into account information on payload compression capabilities of all the intermediate IPXs. This is the case when all the intermediate IPXs have a SLA with one, or both, of the gateways, such as SEPPs.

When negotiating payload compression end-to-end, the handshake process which establishes the logical control plane connection prior to establishing the associated data plane end-to-end connection between the gateways may comprise a negotiation concerning which compression mechanism is used for compressing payload data communicated over the data plane connection. Examples of suitable compression mechanisms include gzip and variants of the Lempel-Ziv-Welch, LZW, compression algorithm. This may be based on the compression capabilities of the intermediate IPXs, such that a compression mechanism which is supported by the SEPPs and the intermediate IPXs may be selected for the payload data on the data plane connection.

The payload may be provided into the data plane connection as compressed javascript object notation, JSON, data, for example. An example of payload data is a discover request to provide to a network function producer 122 in PLMN 112. NFp 122 may be an NRF, for example.

In order to enable the receiving SEPP, pSEPP, to determine whether it should compress the reconstructed HTTP payload before forwarding it onward to the receiving NF, such as NFp, in some embodiments of the present invention the receiving SEPP is configured to determine whether the compression is needed by checking the Content-Encoding header of the original HTTP payload that has been received by cSEPP. This Content-Encoding header is received by pSEPP in a HttpHeader attribute within DataToIntegrityProtectBlock of the N32-f payload as defined in clause 6.2.5.2.5 of 3GPP document TS 29.573. If this block indicates gzip compression, for example, the receiving SEPP may be configured to compress the payload with gzip before sending it onward to the receiving NF, NFp. This may be relevant, for example, in case the original HTTP message that had been received by cSEPP had been compressed by the NFc.

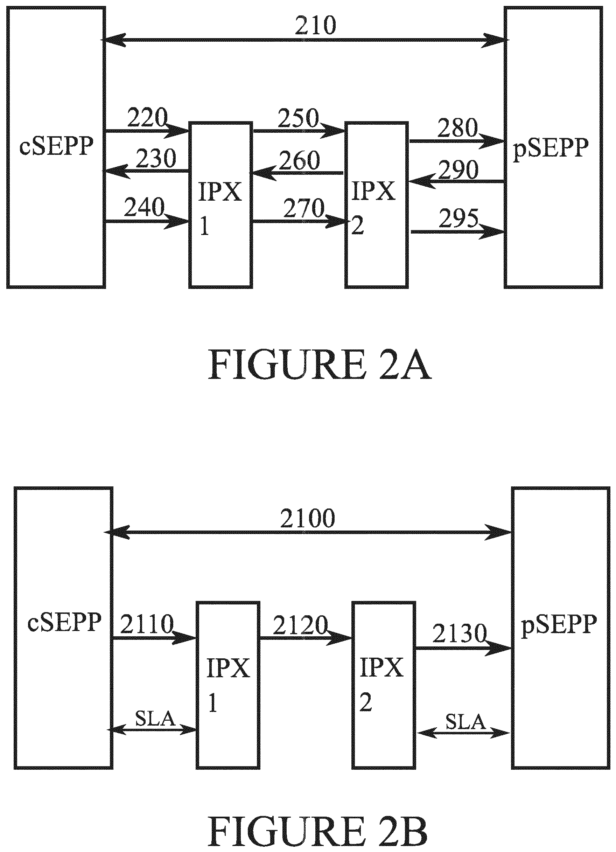

FIGURE 2A illustrates an example embodiment in accordance with at least some embodiments of the present invention. In particular, FIGURE 2A illustrates the hop-by-hop negotiation. The gateways, in the illustrated embodiment SEPPs, are disposed on the left and on the right, and in between them are the intermediate IPXs, of which there are two in this non-limiting example.

Phase 210 represents the handshake process to establish the logical N32-c control plane connection from cSEPP to pSEPP prior to establishing the N32-f connection. As discussed above, the data plane connection may comprise a N32-f data plane connection, for example. The data plane connection may traverse the intermediate IPXs along the way, as discussed herein above.

Phase 220 comprises the cSEPP discovering whether the next node on the N32-f path, IPX1, supports compression of payload over the data plane connection. This discovering may take place using an HTTP POST or HTTP OPTIONS request message, for example. Phase 230 comprises the IPX1 responding to the request, for example by returning a response message indicating support of payload compression. In some embodiments, the message of phase 230 comprises a suggestion of one or more compression mechanisms supported by the IPX1, amounting together to a negotiation concerning a compression mechanism to use between cSEPP and IPX1.

Phase 250 comprises IPX1 discovering whether the next node on the N32-f path, IPX2, supports compression of payload over the data plane connection. This discovering may take place using an HTTP POST or HTTP OPTIONS request message, for example. Phase 260 comprises the IPX2 responding to the request, for example by returning a request message indicating support of payload compression. In some embodiments, the message of phase 260 comprises a suggestion of one or more compression mechanisms supported by IPX2, amounting together to a negotiation concerning a compression mechanism to use between IPX1 and IPX2.

Phase 280 comprises IPX2 discovering whether the next node on the N32-f path, pSEPP, supports compression of payload over the data plane connection. This discovering may take place using an HTTP POST or HTTP OPTIONS request message, for example. Phase 290 comprises the pSEPP responding to the request, for example by returning a request message indicating support of payload compression. In some embodiments, the message of phase 290 comprises a suggesting of one or more compression mechanisms supported by the pSEPP, amounting together to a negotiation concerning a compression mechanism to use between IPX2 and pSEPP.

The message flow 240, 270, 295 represents conveying of payload data over the end-to-end data plane connection from cSEPP to pSEPP, in accordance with payload compression agreements between the participating SEPPs and IPXs. For example, the payload in phase 240 may comprise a N32-f payload compressed with gzip and the payload in phases 270 and 295 may comprise a N32-f payload not compressed or compressed with a different compression algorithm.

Of note in the embodiment of FIGURE 2A, the payload compression mechanism agreed between the nodes need not be the same throughout the connection path of the data plane connection. Thus a first payload compression mechanism may be used between cSEPP and IPX1, and a second payload compression mechanism may be used between IPX1 and IPX2. To enable this, the payload data may be first encrypted and then compressed in cSEPP, such that the intermediate IPXs can de-compress the payload even if they cannot decrypt it. Further, payload compression may be used for only a subset of the connections along the connection path of the data plane connection. For example, the first payload compression mechanism may be used between cSEPP and IPX1, the second payload compression mechanism may be used between IPX1 and IPX2, and the connection from IPX2 to pSEPP may be without payload compression. Non-limiting examples of payload compression mechanisms include gzip and LZW, as discussed herein above.

FIGURE 2B illustrates an example embodiment in accordance with at least some embodiments of the present invention. In particular, FIGURE 2B illustrates the end-to-end negotiation. The gateways, and intermediate IPXs are disposed in the figure as in FIGURE 2A.

Phase 2100 represents the handshake process to establish the logical control plane connection, N32-c, from cSEPP to pSEPP prior to establishing the N32-f data plane connection. As discussed above, the data plane connection may comprise a N32-f data plane connection, for example. The data plane connection may traverse the intermediate IPXs along the way, as discussed herein above. In the embodiment of FIGURE 2B, the cSEPP includes in the handshake process the indication that compression of payload communicated over the data plane connection is supported and desired. For example, this indication may be included in a message comprised in the handshake process that cSEPP transmits to pSEPP.

Prior to phase 2100 or during this phase, cSEPP may be configured to select a preferred payload compression mechanism it knows that at least some of the intermediate IPXs, such as IPX1 and IPX2, will support. To such effect, cSEPP may be configured to store information defining which compression mechanisms are supported by at least some of the IPXs. For example, the cSEPP may be configured with information defining supported compression mechanisms of IPXs which have SLAs with the network in which cSEPP is comprised.

In the illustrated example, cSEPP may negotiate concerning the compression mechanism for itself and IPX1 in case cSEPP has as SLA with IPX1. pSEPP may negotiate concerning the compression mechanism for itself and IPX2 in case pSEPP has as SLA with IPX2. Thus in the illustrated example a compression mechanism may be agreed on by cSEPP and pSEPP which is supported by all the SEPPs and IPXs along the communication path of the data plane connection, such as N32-f.

Phases 2110, 2120 and 2130 represent conveying the payload data over the data plane connection in accordance with the payload compression negotiated in handshake process 2100, for example. The payload may, for example, be compressed with gzip in phases 2110, 2120 and 2130. The payload may comprise any service request for a service producer by the target PLMN, such as a discovery request for example.

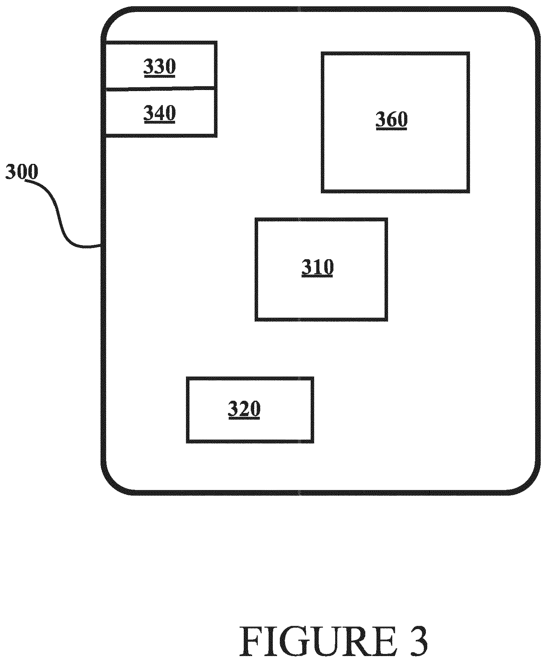

FIGURE 3 illustrates an example apparatus capable of supporting at least some embodiments of the present invention. Illustrated is device 300, which may comprise, for example, a gateway, such as a SEPP, of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core designed by Advanced Micro Devices Corporation. Processor 310 may comprise at least one Qualcomm Snapdragon and/or Intel Xeon processor. Processor 310 may comprise at least one application-specific integrated circuit, ASIC. Processor 310 may comprise at least one field-programmable gate array, FPGA. Processor 310 may be means for performing method steps in device 300, such as initiating and indicating, for example. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a gateway or IPX, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure interoperability parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

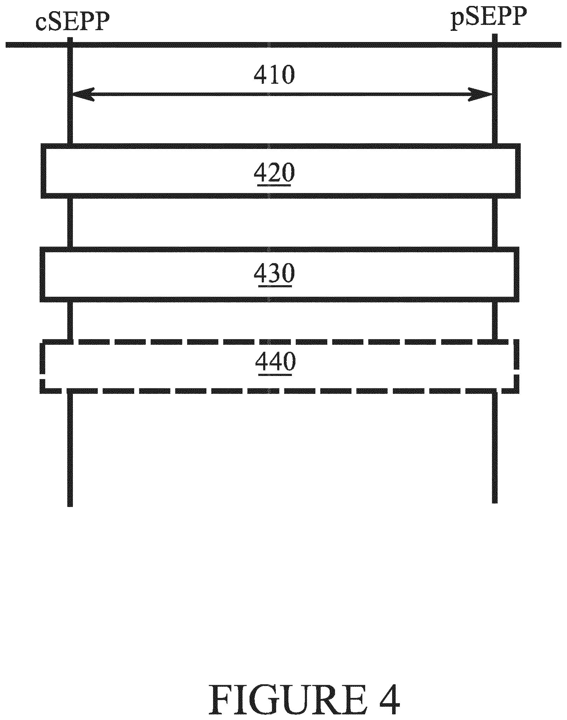

FIGURE 4 illustrates signalling in accordance with at least some embodiments of the present invention. On the vertical axes are disposed, on the left, cSEPP of FIGURE 1 or 2, and on the right, pSEPP of FIGURE 1 or 2. Time advances from the top toward the bottom. The process of FIGURE 4 may correspond to phase 2100 of FIGURE 2B, for example.

Phase 410 comprises a TLS handshaking process, whereby a secure connection may be formed between the SEPPs, for example a hypertext transfer protocol 2, HTTP/2, connection.

Phase 420 is a security capability negotiation procedure. The initiating SEPP initiates this procedure towards the responding SEPP to agree on a security mechanism to use for protecting network function, NF, service related signalling over N32-f. The end to end TLS connection may be setup between the SEPPs before the initiation of this procedure. An agreed security mechanism may be to use TLS or the protocol for N32 interconnect security, PRINS, to protect the data sent over the N32-f connection, for example.

Phase 430 is a parameter exchange procedure. The parameter exchange procedure is performed if the security capability negotiation procedure selected the security mechanism as PRINS. The parameter exchange procedure is performed to agree on a cipher suite to use for protecting NF service related signalling over N32-f. Optionally, protection policies to use for protecting NF service related signalling over N32 are exchanged as part of the parameter exchange procedure. The initiating SEPP, such as cSEPP, may provide a list of supported cipher suites, and the responding SEPP, such as pSEPP, may select one of the cipher suites on the list for use on the N32-f interface. The initiating SEPP may also provide a N32-f context identifier for the responding SEPP to use towards the initiating SEPP for subsequent javascript object signing and encryption, JOSE, protected message forwarding procedures over N32-f.

The indication that compression of payload communicated over the data plane connection is supported and desired may be included in phase 420 or phase 430, for example. Such an indication may comprise an ordered list of compression mechanisms supported by the initiating SEPP. The ordered list may be ordered in preference order, for example based on computational efficiency and/or compression performance. The list may comprise compression mechanisms that the initiating SEPP and IPXs it has SLAs with can support. Negotiation concerning the payload compression method may likewise be comprised in phase 420 or 430, respectively. For example, supported payload compression methods may be included in the message which comprises a list of cipher suites in phase 430. Alternatively or additionally, supported payload compression methods may be included in the message which comprises a list of supported security mechanisms in phase 420.

Optional phase 440 is an N32-f error reporting procedure. When a SEPP is not able to process a message it received over the N32-f interface due to errors, the error information is conveyed to the sending SEPP by using the N32-f error reporting procedure over the N32-c interface.

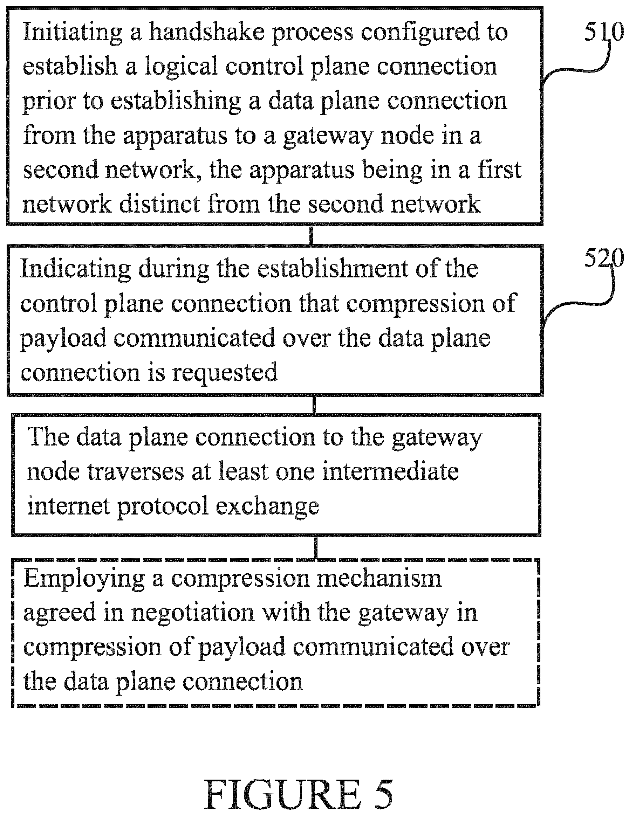

FIGURE 5 is a flow graph of a method in accordance with at least some embodiments of the present invention. The phases of the illustrated method may be performed in a SEPP, or in a control device configured to control the functioning thereof, when installed therein.

Phase 510 comprises initiating, from an apparatus, a handshake process configured to establish a logical control plane connection prior to establishing a data plane connection from the apparatus to a gateway node in second network, the apparatus being in a first network distinct from the second network. Phase 520 comprises indicate during the establishing of the control plane connection that compression of payload communicated over the data plane connection is requested, and wherein the data plane connection to the gateway node traverses at least one intermediate internet protocol exchange. A compression mechanism agreed in a negotiation with the gateway may subsequently be employed in compression of payload communicated over the data plane connection.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in operating communication networks.

### ACRONYMS LIST

JSON javascript object notation

## Claims

1. An apparatus comprising at least one processing core, at least one memory including computer program code, the at least one memory and the computer program code being configured to, with the at least one processing core, cause the apparatus at least to:
- perform, as a first gateway, a handshake process configured to establish a control plane connection prior to establishing an associated data plane connection from the apparatus to a gateway node in first network, the apparatus being in a second network distinct from the first network, wherein the data plane connection to the gateway node traverses at least one intermediate internet protocol exchange;
- receive a hypertext transfer protocol, HTTP, payload communicated over the data plane connection that is compressed or not compressed; and
- determine whether to compress the HTTP payload received over the data plane connection and reconstructed by the apparatus before forwarding it onward to a network function in the second network, wherein the apparatus is configured to perform the determining based on a Content-Encoding header of the reconstructed HTTP payload that is received in the HTTP payload communicated over the data plane connection.

2. A method, comprising:
- performing, by a first gateway, a handshake process configured to establish a control plane connection prior to establishing an associated data plane connection from the apparatus to a gateway node in first network, the apparatus being in a second network distinct from the first network, wherein the data plane connection to the gateway node traverses at least one intermediate internet protocol exchange;
- receiving a hypertext transfer protocol, HTTP, payload communicated over the data plane connection that is compressed or not compressed; and
- determining whether to compress the HTTP payload received over the data plane connection and reconstructed by the first gateway before forwarding it onward to a network function in the second network, wherein the determining is preformed based on a Content-Encoding header of the reconstructed HTTP payload that is received in the HTTP payload communicated over the data plane connection.

3. A non-transitory computer readable medium having stored thereon a set of computer readable instructions that, when executed by at least one processor, cause an apparatus to at least:
- perform as a first gateway a handshake process configured to establish a control plane connection prior to establishing an associated data plane connection from the apparatus to a gateway node in first network, the apparatus being in a second network distinct from the first network, wherein the data plane connection to the gateway node traverses at least one intermediate internet protocol exchange;
- receive a hypertext transfer protocol, HTTP, payload communicated over the data plane connection that is compressed or not compressed; and
- determine whether to compress the HTTP payload received over the data plane connection and reconstructed by the first gateway before forwarding it onward to a network function in the second network, wherein the apparatus is configured to perform the determining based on a Content-Encoding header of the reconstructed HTTP payload that is received in the HTTP payload communicated over the data plane connection.

## Patentansprüche

1. Vorrichtung, die mindestens einen Verarbeitungskern, mindestens einen Speicher, der einen Computerprogrammcode beinhaltet, umfasst, wobei der mindestens eine Speicher und der Computerprogrammcode dazu ausgelegt sind, die Vorrichtung mit dem mindestens einen Verarbeitungskern zu veranlassen, mindestens Folgendes durchzuführen:
- Durchführen eines Handshakeprozesses, der dazu ausgelegt ist, vor dem Aufbauen einer verknüpften Datenebenenverbindung von der Vorrichtung zu einem Gatewayknoten im ersten Netzwerk eine Steuerebenenverbindung aufzubauen, als ein erstes Gateway, wobei sich die Vorrichtung in einem zweiten Netzwerk befindet, das sich vom ersten Netzwerk unterscheidet, wobei die Datenebenenverbindung zum Gatewayknoten mindestens einen Zwischeninternetprotokollaustausch durchquert;
- Empfangen einer Hypertexttransferprotokoll(HTTP)-Nutzlast, die über die Datenebenenverbindung kommuniziert wird und komprimiert oder nicht komprimiert ist; und
- Bestimmen, ob die HTTP-Nutzlast, die über die Datenebenenverbindung empfangen und von der Vorrichtung rekonstruiert wurde, komprimiert werden soll, bevor sie zu einer Netzwerkfunktion im zweiten Netzwerk weitergeleitet wird, wobei die Vorrichtung dazu ausgelegt ist, das Bestimmen auf Basis eines Inhaltscodierungsheaders der rekonstruierten HTTP-Nutzlast, der in der über die Datenebenenverbindung kommunizierten HTTP-Nutzlast empfangen wird, durchzuführen.

2. Verfahren, das Folgendes umfasst:
- Durchführen eines Handshakeprozesses, der dazu ausgelegt ist, vor dem Aufbauen einer verknüpften Datenebenenverbindung von der Vorrichtung zu einem Gatewayknoten im ersten Netzwerk eine Steuerebenenverbindung aufzubauen, durch ein erstes Gateway, wobei sich die Vorrichtung in einem zweiten Netzwerk befindet, das sich vom ersten Netzwerk unterscheidet, wobei die Datenebenenverbindung zum Gatewayknoten mindestens einen Zwischeninternetprotokollaustausch durchquert;
- Empfangen einer Hypertexttransferprotokoll(HTTP)-Nutzlast, die über die Datenebenenverbindung kommuniziert wird und komprimiert oder nicht komprimiert ist; und
- Bestimmen, ob die HTTP-Nutzlast, die über die Datenebenenverbindung empfangen und vom ersten Gateway rekonstruiert wurde, komprimiert werden soll, bevor sie zu einer Netzwerkfunktion im zweiten Netzwerk weitergeleitet wird, wobei das Bestimmen auf Basis eines Inhaltscodierungsheaders der rekonstruierten HTTP-Nutzlast, der in der über die Datenebenenverbindung kommunizierten HTTP-Nutzlast empfangen wird, durchgeführt wird.

3. Nichttransitorisches computerlesbares Medium, auf dem ein Satz von computerlesbaren Anweisungen gespeichert ist, die, wenn sie von mindestens einem Prozessor ausgeführt werden, eine Vorrichtung mindestens zu Folgendem veranlassen:
- Durchführen eines Handshakeprozesses, der dazu ausgelegt ist, vor dem Aufbauen einer verknüpften Datenebenenverbindung von der Vorrichtung zu einem Gatewayknoten im ersten Netzwerk eine Steuerebenenverbindung aufzubauen, als ein erstes Gateway, wobei sich die Vorrichtung in einem zweiten Netzwerk befindet, das sich vom ersten Netzwerk unterscheidet, wobei die Datenebenenverbindung zum Gatewayknoten mindestens einen Zwischeninternetprotokollaustausch durchquert;
- Empfangen einer Hypertexttransferprotokoll(HTTP)-Nutzlast, die über die Datenebenenverbindung kommuniziert wird und komprimiert oder nicht komprimiert ist; und
- Bestimmen, ob die HTTP-Nutzlast, die über die Datenebenenverbindung empfangen und vom ersten Gateway rekonstruiert wurde, komprimiert werden soll, bevor sie zu einer Netzwerkfunktion im zweiten Netzwerk weitergeleitet wird, wobei die Vorrichtung dazu ausgelegt ist, das Bestimmen auf Basis eines Inhaltscodierungsheaders der rekonstruierten HTTP-Nutzlast, der in der über die Datenebenenverbindung kommunizierten HTTP-Nutzlast empfangen wird, durchzuführen.

## Revendications

1. Appareil comprenant au moins un cœur de processeur, au moins une mémoire comportant un code de programme informatique, l'au moins une mémoire et le code de programme informatique étant configurés pour, avec l'au moins un cœur de processeur, amener l'appareil à au moins :
- réaliser, comme première passerelle, un processus de poignée de main configuré pour établir une connexion de plan de contrôle avant d'établir une connexion de plan de données associée, de l'appareil à un nœud de passerelle dans un premier réseau, l'appareil se trouvant dans un deuxième réseau distinct du premier réseau, dans lequel la connexion de plan de données au nœud de passerelle traverse au moins un échange de protocole Internet intermédiaire ;
- recevoir une charge utile de protocole de transfert hypertexte, HTTP, communiquée sur la connexion de plan de données qui est compressée ou non compressée ; et
- déterminer s'il convient de compresser la charge utile HTTP reçue sur la connexion de plan de données et reconstruite par l'appareil avant de la transférer ultérieurement à une fonction réseau dans le deuxième réseau, dans lequel l'appareil est configuré pour faire la détermination sur la base d'un en-tête Content-Encoding [codage de contenu] de la charge utile HTTP reconstruite qui est reçu dans la charge utile HTTP communiquée sur la connexion de plan de données.

2. Procédé, comprenant les étapes suivantes :
- réaliser, par une première passerelle, un processus de poignée de main configuré pour établir une connexion de plan de contrôle avant d'établir une connexion de plan de données associée, de l'appareil à un nœud de passerelle dans un premier réseau, l'appareil se trouvant dans un deuxième réseau distinct du premier réseau, dans lequel la connexion de plan de données au nœud de passerelle traverse au moins un échange de protocole Internet intermédiaire ;
- recevoir une charge utile de protocole de transfert hypertexte, HTTP, communiquée sur la connexion de plan de données qui est compressée ou non compressée ; et
- déterminer s'il convient de compresser la charge utile HTTP reçue sur la connexion de plan de données et reconstruite par la première passerelle avant de la transférer ultérieurement à une fonction réseau dans le deuxième réseau, dans lequel la détermination est faite sur la base d'un en-tête Content-Encoding de la charge utile HTTP reconstruite qui est reçu dans la charge utile HTTP communiquée sur la connexion de plan de données.

3. Support non transitoire lisible sur ordinateur sur lequel est stocké un ensemble d'instructions lisibles par ordinateur qui, lorsqu'elles sont exécutées par au moins un processeur, amènent un appareil à au moins :
- réaliser comme première passerelle un processus de poignée de main configuré pour établir une connexion de plan de contrôle avant d'établir une connexion de plan de données associée, de l'appareil à un nœud de passerelle dans un premier réseau, l'appareil se trouvant dans un deuxième réseau distinct du premier réseau, dans lequel la connexion de plan de données au nœud de passerelle traverse au moins un échange de protocole Internet intermédiaire ;
- recevoir une charge utile de protocole de transfert hypertexte, HTTP, communiquée sur la connexion de plan de données qui est compressée ou non compressée ; et
- déterminer s'il convient de compresser la charge utile HTTP reçue sur la connexion de plan de données et reconstruite par la première passerelle avant de la transférer ultérieurement à une fonction réseau dans le deuxième réseau, dans lequel l'appareil est configuré pour faire la détermination sur la base d'un en-tête Content-Encoding de la charge utile HTTP reconstruite qui est reçu dans la charge utile HTTP communiquée sur la connexion de plan de données.
